(19) **Europäisches Patentamt European Patent Office Office européen des brevets**

(11) **EP 4 473 347 B1**

(12) **EUROPEAN PATENT SPECIFICATION**

(45) Date of publication and mention
of the grant of the patent:
**08.04.2026  Bulletin 2026/15**

(21) Application number: **23709033.7**

(22) Date of filing: **27.01.2023**

(51) International Patent Classification (IPC):
**G01V 3/14** *(2006.01)*

(52) Cooperative Patent Classification (CPC):
**G01V 3/14**

(86) International application number:
**PCT/US2023/061513**

(87) International publication number:
**WO 2023/147517 (03.08.2023 Gazette 2023/31)**

(54) **DETERMINING AT LEAST ONE PETROPHYSICAL PROPERTY**

BESTIMMUNG VON MINDESTENS EINER PETROPHYSIKALISCHEN EIGENSCHAFT

DÉTERMINATION D'AU MOINS UNE PROPRIÉTÉ PÉTROPHYSIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **31.01.2022  US 202263305144 P**

(43) Date of publication of application:
**11.12.2024  Bulletin 2024/50**

(73) Proprietor: **Chevron U.S.A. Inc.**
**San Ramon, CA 94583 (US)**

(72) Inventors:
• **POSENATO GARCIA, Artur**
  **San Ramon, California 94583-0806 (US)**
• **MALLAN, Robert Keays**
  **San Ramon, California 94583-0806 (US)**
• **SUN, Boqin**
  **San Ramon, California 94583-0806 (US)**

(74) Representative: **Haseltine Lake Kempner LLP**
**One Portwall Square**
**Portwall Lane**
**Bristol BS1 6BH (GB)**

(56) References cited:
• **HAN JIANG ET AL: "A comparison of clustering algorithms applied to fluid characterization using NMR T1-T2 maps of shale", COMPUTERS & GEOSCIENCES, vol. 126, 2 February 2019 (2019-02-02), AMSTERDAM, NL, pages 52 - 61, XP055742289, ISSN: 0098-3004, DOI: 10.1016/ j.cageo.2019.01.021**
• **LI CHANG-XI ET AL: "Classification of tight sandstone reservoirs based on NMR logging", APPLIED GEOPHYSICS, CHINESE GEOPHYSICAL SOCIETY, HEIDELBERG, vol. 16, no. 4, 1 December 2019 (2019-12-01), pages 549 - 558, XP037086550, ISSN: 1672-7975, [retrieved on 20200406], DOI: 10.1007/S11770-019-0793-Y**
• **GE XINMIN ET AL: "An unsupervised clustering method for nuclear magnetic resonance transverse relaxation spectrums based on the Gaussian mixture model and its application", PETROLEUM EXPLORATION AND DEVELOPMENT, ELSEVIER, AMSTERDAM, NL, vol. 49, no. 2, 1 April 2022 (2022-04-01), pages 339 - 348, XP087024141, ISSN: 1876-3804, [retrieved on 20220418], DOI: 10.1016/ S1876-3804(22)60028-4**

EP 4 473 347 B1

**Description**

TECHNICAL FIELD

The disclosed embodiments relate generally to techniques of determining at least one petrophysical property.

BACKGROUND

It can be challenging to reliably identify fluid components (e.g., heavy hydrocarbon /light hydrocarbon, bound water/free water) and to estimate their corresponding pore volumes in formations with complex lithology (e.g., organic-rich mudrocks), complex pore structure (e.g., non-Archie rocks), or varying wettability conditions. Industry standards for assessment of fluid volumes rely on the interpretation of resistivity measurements. These techniques typically require model calibration, which might be time-consuming, expensive. and can only differentiate conductive and non-conductive fluids.

Interpretation of two dimensional (2D) nuclear magnetic resonance (NMR) maps provides a viable alternative to resistivity logs for identification of fluid components and fluid volumes assessment. However, conventional techniques for interpretation of 2D NMR usually rely on cutoffs in the $T_1$-$T_2$ or $D$-$T_2$ maps. The application of cutoffs might cause uncertainties especially when hydrocarbon and water relaxation responses overlap. Reference may be made to HAN JIANG ET AL: "A comparison of clustering algorithms applied to fluid characterization using NMR T1-T2 maps of shale", COMPUTERS & GEOSCIENCES, vol. 126, 2 February 2019, pages 52-61, which investigates the clustering approach for fluid characterization on $T_1$-$T_2$ maps by comparing 6 different algorithms, and which provides a practical guide for applying cluster analysis in fluid characterization in Nuclear Magnetic Resonance $T_1$-$T_2$ maps. Reference may be made to LI CHANG-XI ET AL: "Classification of tight sandstone reservoirs based on NMR logging", APPLIED GEOPHYSICS, CHINESE GEOPHYSICAL SOCIETY, HEIDELBERG, vol. 16, no. 4, 1 December 2019, pages 549-558, which relates to a classification method. The method involves obtaining six parameters (the volume, mean radius, and standard deviation of the small and large pores) that represent the characteristics of pore distribution and rock heterogeneity, calculating the total porosity via NMR logging, and classifying the reservoirs via cluster analysis by adopting a bimodal lognormal distribution to fit the NMR $T_2$ spectrum.

Thus, there exists a need for techniques of determining at least one petrophysical property (e.g., pore volumes of each pore/fluid component).

SUMMARY

The present invention is defined by the appended independent claims to which reference should now be made. Specific embodiments are defined in the dependent claims. In accordance with some embodiments, a method of determining at least one petrophysical property is disclosed.

In another aspect of the present invention, to address the aforementioned problems, some embodiments provide a non-transitory computer readable storage medium storing one or more programs. The one or more programs comprise instructions, which when executed by a computer system with one or more processors and memory, cause the computer system to perform any of the methods provided herein.

In yet another aspect of the present invention, to address the aforementioned problems, some embodiments provide a computer system. The computer system includes one or more processors, memory, and one or more programs. The one or more programs are stored in memory and configured to be executed by the one or more processors. The one or more programs include an operating system and instructions that when executed by the one or more processors cause the computer system to perform any of the methods provided herein.

BRIEF DESCRIPTION OF THE DRAWINGS

FIGS. 1A and 1B: $T_2$ distribution of a pore system saturated with water and hydrocarbon where the individual responses of each fluid result in a negligible overlap illustrated in FIG. 1A and a significant overlap illustrated in FIG. 1B. The $T_2$ distribution of the water, hydrocarbon, and pore system are displayed in FIGS. 1A-1B.

FIGS. 2A-2B: 2D NMR maps with two distinct regions associated with pore-fluid systems A and B illustrated in FIG. 2A and with overlapping response of multiple pore-fluid systems illustrated in FIG. 2B.

FIG. 3: One embodiment of a workflow overview diagram is illustrated in FIG. 3.

FIG. 4: One embodiment of a workflow for approximating the 2D NMR maps with a superposition of multi-dimensional gaussian distributions is illustrated in FIG. 4.

FIG. 5: One embodiment of a workflow for assigning each gaussian distribution to corresponding fluid/pore type cluster is illustrated in FIG. 5.

FIG. 6: Comparison of the original 2D NMR maps obtained from a standard inversion algorithm is illustrated in FIG. 6A against its corresponding superposition of gaussian functions illustrated in FIG. 6B.

FIG. 7: Clustering results for the 3D data space including all the analyzed data are illustrated in FIG. 7A and the projection of the 3D dataspace into the $T_1 \times T_2$ space is illustrated in FIG 7B. Bound water, hydrocarbon, and free/non-wetting water are represented in FIG. 7B.

FIG. 8: Comparison of the volume fraction of water is illustrated in FIG. 8A, volume fraction of hydrocarbon is illustrated in FIG. 8B, and pore volume fraction is illustrated in FIG. 8C estimated from the introduced workflow against the results obtained from multi-mineral analysis for the first formation dataset.

FIG. 9: Comparison of the volume fraction of water is illustrated in FIG. 9A, volume fraction of hydrocarbon is illustrated in FIG. 9B, and pore volume fraction is illustrated in FIG. 9C estimated from the introduced workflow against the results obtained from multi-mineral analysis for the second formation dataset.

FIG. 10 illustrates an example system of determining at least one petrophysical property.

FIG. 11 illustrates an example workflow for determining at least one petrophysical property.

Like reference numerals refer to corresponding parts throughout the drawings.

DETAILED DESCRIPTION OF EMBODIMENTS

The interpretation of conventional well-log measurements for pore-volume assessment generally requires information about the dominant lithology. NMR measurements, on the other hand, measure the density of hydrogen nuclei in the reservoir fluids. The density of hydrogen nuclei can be translated into in-situ equivalent water-filled porosity. A common approach for NMR-based porosity assessment consists of integrating the area under the transverse magnetization decay times (i.e., $T_2$ distribution). The area under the $T_2$-distribution curve corresponds to the initial amplitude of the spin-echo train which can be calibrated in terms of water-filled pore volume. The transverse relaxation observed in NMR measurements is dominated by three main mechanisms: the surface relaxation, the bulk relaxation, and the diffusive relaxation. Thus, the $T_2$ measurements can be expressed as Equation 1:

Equation 1:

$$\frac{1}{T_2} = \frac{1}{T_{2,b}} + \rho_2 \frac{S}{V} + \frac{D(\gamma G T_E)^2}{12}$$

where $T_{2,b}$ is the bulk relaxation time (s), $\rho_2$ is the surface relaxivity of the pores (m/s), S is the total surface of the pores in contact with the fluid (m$^2$), $V$ is the total volume of the pores containing the fluid (m$^3$), $D$ is the molecular diffusion coefficient (m$^2$/s), $G$ is the magnetic gradient strength (T/m), $T_E$ is the time between spin echoes in the Carr, Purcell, Meiboom and Gill (CPMG) sequence (s), and $\gamma$ is the gyromagnetic ratio of the proton (rad/Ts).

The aforementioned Equation 1 is valid provided that the fluid-filled pore network is in the fast diffusion limit. The condition that defines the fast diffusion limit can be quantified through the following inequality for the NMR Biot number expressed as Equation 2:

Equation 2:

$$Bi_{NMR} = \frac{r \rho_2}{D} \ll 1$$

where r is a characteristic length scale generally assumed to be the pore-body radius for the case of spherical pores.

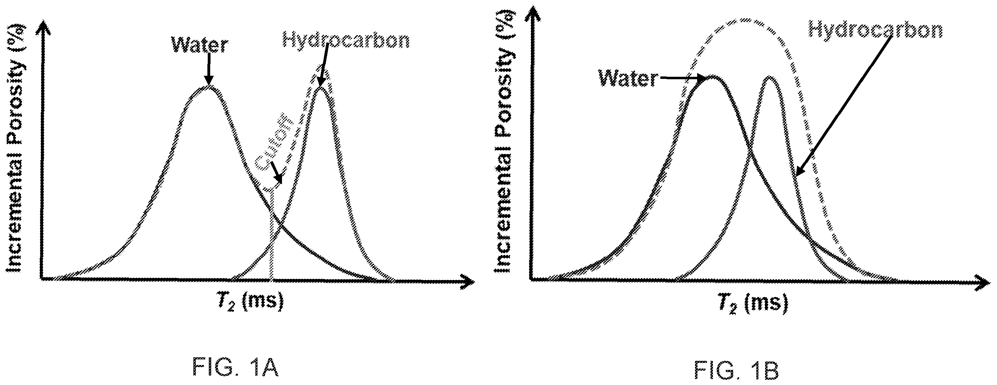

In addition to the porosity, the $T_2$ distribution can be translated into pore-sizes distribution by correlating the surface-to-volume ratio to pore size. Furthermore, the interpretation of NMR measurements can be used for assessment of movable and bound fluids, permeability, and the volume fraction of water and hydrocarbon. FIG. 1A illustrates a $T_2$ distribution of a porous medium saturated with hydrocarbon and water. In this case, the volume fraction of water and hydrocarbon phases are approximately equal to the area under the left- and right-hand sides of the $T_2$ distribution. The

cutoff separating the left- and right-hand sides of the $T_2$ distribution corresponds to the local minima between the two local maxima (i.e., "peaks").

In many cases, as illustrated in FIG. 1B, it is not possible to distinguish the individual contributions of the hydrocarbon and water phases (which could be approximated with gaussians) to the $T_2$ distribution of the porous medium. The difference between the $T_2$ distributions illustrated in FIGS. 1A and 1B could be explained by a difference in the properties of the hydrocarbon phase, provided that the fluid saturations and pore structure are the same. An increase in viscosity of the hydrocarbon phase, which typically correlates with the hydrocarbon density, result in shorter bulk transverse relaxation times. Moreover, as the viscosity of the fluids increases, the bulk relaxation and surface relaxation times decreases. Therefore, the dominant relaxation mechanism is a function of the fluid viscosity in addition to the pore sizes and surface relaxivity.

The interpretation of NMR measurements is notably more complex in organic-rich mudrocks (i.e., "shales"). These formations contain significant volume fraction of organic matter (e.g., kerogen, bitumen) and clays. The high-density organic content often affects the faster $T_2$ transverse relaxation response of organic-rich rocks and, hence, results in a matrix-dependent magnetization-decay response. Furthermore, the NMR $T_2$ distribution associated with water can range from a few seconds, for the bulk phase, to milliseconds, for bound water. Similarly, the NMR response associated with light to medium density hydrocarbons also has $T_2$ relaxation times ranging from a few seconds down to a few milliseconds. Consequently, identifying the $T_2$ response associated with each phase individually can be challenging in unconventional formations.

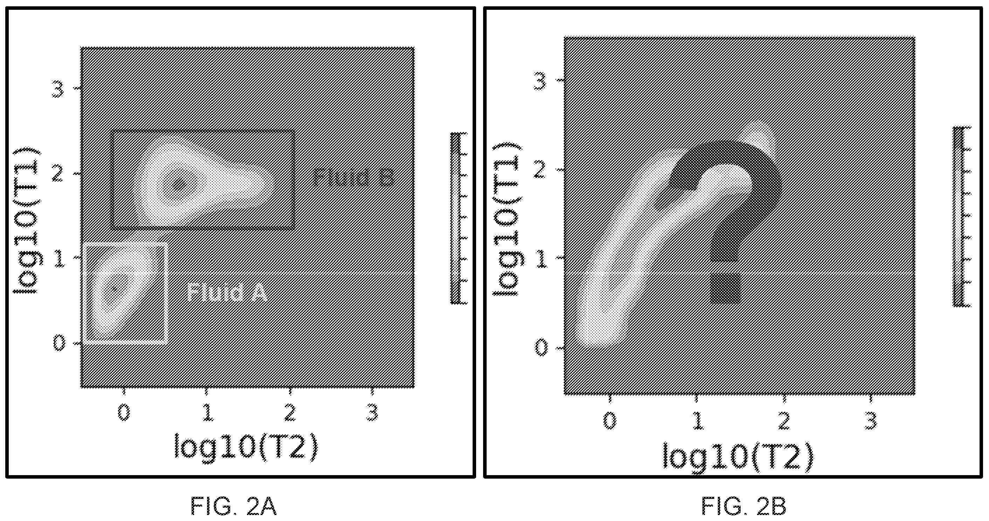

Two-dimensional NMR measurements (e.g., $T_1$ and $T_2$) have been recently made available for enhanced petrophysical interpretation in organic-rich mudrock formations. Laboratory measurements performed on core samples suggest that there is a significant contrast in $T_1/T_2$ ratios of water and hydrocarbon phases including bitumen and light hydrocarbon. For instance, one approach observed that the $T_1/T_2$ ratios of light hydrocarbon can be an order of magnitude higher that the corresponding ratios for the water phase in organic-rich mudrocks. In general, the bulk or low viscosity non-wetting fluids (e.g., hydrocarbon, water) have $T_1/T_2$ ratios of approximately 1. The low viscosity wetting fluids in the inorganic pores tend to have $T_1/T_2$ ratios ranging from 1 to 2. Typically, clay-bound water has $T_1$ values lower than 15 ms and $T_1/T_2$ ratio between 1 and 2. The hydrocarbon in the organic pores is associated with $T_1/T_2$ ratios ranging from 2 to 6 and the heavier hydrocarbon components (e.g., bitumen, kerogen) have very short $T_2$ values, which could be indistinguishable from bound water, and $T_1/T_2$ ratios ranging from 4 to 100. Therefore, the contrasting $T_1/T_2$ ratios can be used to define "signatures" (i.e., regions in the 2D NMR maps) associated with each pore-fluid type combination. FIG. 2A illustrates a 2D NMR map with two distinct regions associated with pore-fluid systems A and B. In this example, Fluid A is bound water and Fluid B hydrocarbon. Even in this example, it is not entirely clear whether the region associated with Fluid B contains only hydrocarbon or water as well.

The "signatures", however, are influenced by multiple factors including pore sizes and geometry, fluid properties (e.g., composition, density, viscosity), and the spatial distribution of the fluid phases within the porous medium. Therefore, unless the pore-fluid systems have clearly distinct and non-overlapping signatures in the $T_1$-$T_2$ domain, it is challenging to quantify the volume fractions associated with each fluid uniquely from 2D NMR maps. FIG. 2B presents an example of a 2D NMR map with overlapping response of multiple pore-fluid systems to illustrate the challenges associated with the identification of distinct pore-fluid systems.

To address these challenges, one approach developed an interpretation workflow for assessment of fluid volumes based on trends experimentally observed in the $T_1$-$T_2$ ratios for different fluid phases. Another approach calculated fluid saturations based on cutoffs defined on 2D NMR maps. The interpretation workflows proposed by these two approaches require either experimental measurements performed on core samples or additional information about the pore structure and fluid composition. Alternatively, a third approach proposed an unsupervised machine-learning algorithm (i.e., blind source separation - BSS) for assessment of fluid volumes in organic-rich murdocks relying solely on the available 2D NMR maps. However, all the aforementioned interpretation workflows assume that each point in $T_1$-$T_2$ space corresponds at most to one fluid. This assumption could lead to interpretation errors in cases where the 2D NMR responses of different fluid phases overlap significantly.

Described herein are methods, systems, and computer readable storage media that provide a manner of determining at least one petrophysical property. One embodiment of a method comprises obtaining a plurality of nuclear magnetic resonance (NMR) maps for a plurality of zones (e.g., depths). The method comprises decomposing each NMR map to generate a plurality of probability density functions (e.g., gaussian distributions) for each zone. The method comprises clustering the probability density functions for at least a portion of the plurality of zones into a plurality of clusters and determining at least one petrophysical property using the plurality of clusters.

Advantageously, some embodiments provided herein may be used for identifying/tracking fluid components in the wellbore and estimating their corresponding pore volumes uniquely from the interpretation of NMR measurements (e.g., 2D NMR measurements (e.g., $T_1$-$T_2$, $D$-$T_2$), 3D NMR measurements). Some embodiments provided herein approximate NMR maps with a superposition of probability density functions. A clustering technique (e.g., spectral clustering technique) applied to the data space containing the parameters of the gaussian distributions determines their corresponding fluid/pore components. Finally, the volume under the probability density functions associated with each cluster translates directly into the pore volume corresponding to different fluid components (e.g., hydrocarbon types such as heavy oil, light oil, gas, solid hydrocarbon, water types such as clay bound, capillary bound, movable).

Advantageously, some embodiments provided herein approximate NMR maps (e.g., 2D NMR maps) with a superposition of probability density functions (e.g., 2D gaussian distributions). The embodiments automatically determine the optimum number of probability density functions and their corresponding properties (i.e., amplitudes, variances, and means). Next, a clustering technique (e.g., spectral clustering technique) is implemented to the data space containing the probability density functions parameters obtained for the entire logged dataset. Each probability density function is assigned to a cluster corresponding to different fluid/pore components. The volumes under the probability density functions corresponding to each cluster in each zone (e.g., depth, formation, etc.) may be calculated. The volumes associated with each cluster translates directly into the pore volumes corresponding to the different fluid components (e.g., hydrocarbon types, water types) at each zone.

Advantageously, some of the embodiments provided herein integrate fundamental petrophysical knowledge on NMR response of sedimentary rocks with statistical and machine learning techniques. For example, some embodiments may include optimization-based methods, machine learning methods such as neural networks, statistical methods such as gaussian mixture models) for decomposing the maps into probability density functions. The combination of these techniques provides a more robust interpretation while minimizing the need for extensive calibration and user-defined inputs. Consequently, it increases the automation level of the interpretation process of NMR measurements (e.g., 2D NMR measurements). Furthermore, some of the embodiments provided herein may be applied to any asset, including conventional and unconventional formations.

Advantageously, the reliability of water and hydrocarbon pore volumes estimated were verified using well-log data obtained from two example formations. The fluid volumes estimated by some embodiments provided herein agreed well with the fluid volumes estimated by multi-mineral analysis in both formations.

Reference will now be made in detail to various embodiments, examples of which are illustrated in the accompanying drawings. In the following detailed description, numerous specific details are set forth in order to provide a thorough understanding of the present disclosure and the embodiments described herein. However, embodiments described herein may be practiced without these specific details. In other instances, well-known methods, procedures, components, and mechanical apparatus have not been described in detail so as not to unnecessarily obscure aspects of the embodiments.

The methods and systems of the present disclosure may, in part, use one or more models that are machine-learning algorithms. These models may be supervised or unsupervised. Supervised learning algorithms are trained using labeled data (i.e., training data) which consist of input and output pairs. By way of example and not limitation, supervised learning algorithms may include classification and/or regression algorithms such as neural networks, generative adversarial networks, linear regression, etc. Unsupervised learning algorithms are trained using unlabeled data, meaning that training data pairs are not needed. By way of example and not limitation, unsupervised learning algorithms may include clustering and/or association algorithms such as k-means clustering, principal component analysis, singular value decomposition, etc. Although the present disclosure may name specific models, those of skill in the art will appreciate that any model that may accomplish the goal may be used.

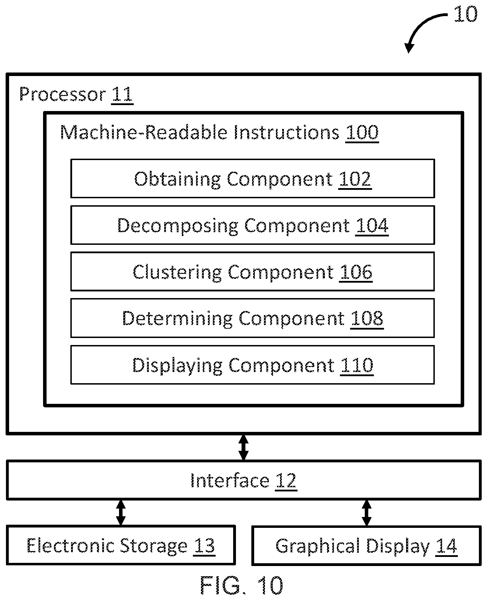

The methods and systems of the present disclosure may be implemented by a system and/or in a system, such as a system 10 shown in FIG. 10. The system 10 may include one or more of a processor 11, an interface 12 (e.g., bus, wireless interface), an electronic storage 13, a graphical display 12, and/or other components. A method of determining at least one petrophysical property may be performed by the processor 11 that (i) uses a plurality of NMR maps for a plurality of zones as input and (ii) at least one petrophysical property is determined as output.

The electronic storage 13 may be configured to include electronic storage medium that electronically stores information. The electronic storage 13 may store software algorithms, information determined by the processor 11, information received remotely, and/or other information that enables the system 10 to function properly. For example, the electronic storage 13 may store information relating to a plurality of NMR maps for a plurality of zones (e.g., depths), a plurality of probability density functions for each zone, a plurality of clusters, at least one petrophysical property, and/or other information. The electronic storage media of the electronic storage 13 may be provided integrally (*i.e.,* substantially non-removable) with one or more components of the system 10 and/or as removable storage that is connectable to one or more components of the system 10 via, for example, a port (*e.g.,* a USB port, a Firewire port, *etc.*) or a drive (*e.g.,* a disk drive, *etc.*). The electronic storage 13 may include one or more of optically readable storage media (*e.g.,* optical disks, *etc.*), magnetically readable storage media (*e.g.,* magnetic tape, magnetic hard drive, floppy drive, *etc.*), electrical charge-based storage media (*e.g.,* EPROM, EEPROM, RAM, *etc.*), solid-state storage media (*e.g.,* flash drive, *etc.*), and/or other electronically readable storage media. The electronic storage 13 may be a separate component within the system 10, or the electronic storage 13 may be provided integrally with one or more other components of the system 10 (*e.g.,* the processor 11). Although the electronic storage 13 is shown in FIG. 1 as a single entity, this is for illustrative purposes only. In some implementations, the electronic storage 13 may comprise a plurality of storage units. These storage units may be physically located within the same device, or the electronic storage 13 may represent storage functionality of a plurality of devices operating in coordination.

The graphical display 14 may refer to an electronic device that provides visual presentation of information. The graphical display 14 may include a color display and/or a non-color display. The graphical display 14 may be configured to visually present information. The graphical display 14 may present information using/within one or more graphical user interfaces. For example, the graphical display 14 may present information relating to (a) at least one petrophysical property, (b) a representation of a multi-dimensional data space of each probability density function, each cluster, label of each cluster, or any combination thereof, and/or (c) other information.

The processor 11 may be configured to provide information processing capabilities in the system 10. As such, the processor 11 may comprise one or more of a digital processor, an analog processor, a digital circuit designed to process information, a central processing unit, a graphics processing unit, a microcontroller, an analog circuit designed to process information, a state machine, and/or other mechanisms for electronically processing information. The processor 11 may be configured to execute one or more machine-readable instructions 100 to facilitate determining at least one petrophysical property. The machine-readable instructions 100 may include one or more computer program components. The machine-readable instructions 100 may include an obtaining component 102, a decomposing component 104, a clustering component 106, a determining component 108, a displaying component 110, and/or other computer program components.

It should be appreciated that although computer program components are illustrated in FIG. 1 as being co-located within a single processing unit, one or more of computer program components may be located remotely from the other computer program components. While computer program components are described as performing or being configured to perform operations, computer program components may comprise instructions which may program processor 11 and/or system 10 to perform the operation.

While computer program components are described herein as being implemented via processor 11 through machine-readable instructions 100, this is merely for ease of reference and is not meant to be limiting. In some implementations, one or more functions of computer program components described herein may be implemented via hardware (e.g., dedicated chip, field-programmable gate array) rather than software. One or more functions of computer program components described herein may be software-implemented, hardware-implemented, or software and hardware-implemented.

Referring again to machine-readable instructions 100, the obtaining component 102 may be configured to obtain a plurality of nuclear magnetic resonance (NMR) maps for a plurality of zones (e.g. depths, formations, electrofacies, etc.). The decomposing component 104 may be configured to decompose each NMR map to generate a plurality of probability density function for each zone. In some embodiments, the plurality of NMR maps and the plurality of probability density function for each zone are two-dimensional (2D). In some embodiments, the plurality of NMR maps and the plurality of probability density function for each zone are three-dimensional (3D). In some embodiments, the decomposing comprises using mean $T_1$ values, mean $T_2$ values, mean diffusion values, amplitudes, variances, covariances, or any combination thereof. In some embodiments, the decomposing comprises using mean $T_1$, mean $T_2$ values, mean diffusion values of each probability density function from mean $\vec{\mu}_i$ values of each probability density function. In some embodiments, peak locations correspond to the mean $\vec{\mu}_i$ values of each probability density function. In some embodiments, the decomposing comprises determining an optimum superposition of probability density function for each zone by minimizing a difference between the corresponding NMR map and the corresponding superposition of the probability density function. The decomposing may be done, by way of example but not limitation, machine learning methods such as neural networks, or statistical methods such as gaussian mixture models, and, according to the invention, the decomposing is done by an optimization-based method.

The clustering component 106 may be configured to cluster the probability density function for at least a portion of the plurality of zones into a plurality of clusters. In some embodiments, an unsupervised clustering algorithm is utilized for the clustering. The unsupervised clustering algorithm utilized for the clustering includes assigning each cluster to a fluid type (e.g., hydrocarbon types such as heavy oil, light oil, gas, solid hydrocarbon, water types such as clay bound, capillary bound, movable) and a pore type (e.g., micro, meso, vuggy). In some embodiments, a supervised clustering algorithm is utilized for the clustering. The supervised clustering algorithm utilized for the clustering includes assigning each cluster to a fluid type and a pore type. In some embodiments, the clustering comprises creating a multi-dimensional (e.g., 3D or higher) data space using: pore volume fraction of each gaussian distribution; coordinates of mean $T_1$ values, mean $T_2$ values, mean diffusion values, or any combination thereof of each gaussian distribution; amplitudes, variances, covariances, or any combination thereof; or any combination thereof. In some embodiments, the clustering comprises using a clustering algorithm, and the clustering algorithm comprises Mini-Batch, K-Means, Affinity Propagation, Mean Shift, Spectral Clustering, Ward Hierarchical method, Agglomerative Clustering, DBSCAN, OPTICS, BIRCH, Gaussian Mixture, or any combination thereof. In some embodiments, the clustering comprises using a clustering algorithm, and also comprises: obtaining a user defined number of clusters to characterize fluid types and pore types; and using the user defined number of clusters as an input to the clustering algorithm.

The determining component 108 may be configured to determine at least one petrophysical property using the plurality of clusters. The at least one petrophysical property comprises fluid component, pore volume, pore type, hydrocarbon saturation, water saturation, or any combination thereof. The fluid component comprises bound water, free water, hydrocarbon, or any combination thereof. In some embodiments, determining a pore volume of a particular fluid component corresponding to a particular cluster comprises summing each pore volume of each gaussian distribution in the particular cluster.

The displaying component 110 may be configured to generate a representation of a multi-dimensional data space of each gaussian distribution, each cluster, label of each cluster, or any combination thereof as well as displaying the representation via a display. The displaying component 110 may also generate a representation of at least one petrophysical property that is determined using the plurality of clusters as well as displaying the representation via a display.

The description of the functionality provided by the different computer program components described herein is for illustrative purposes, and is not intended to be limiting, as any of computer program components may provide more or less functionality than is described. For example, one or more of computer program components may be eliminated, and some or all of its functionality may be provided by other computer program components. As another example, processor 11 may be configured to execute one or more additional computer program components that may perform some or all of the functionality attributed to one or more of computer program components described herein.

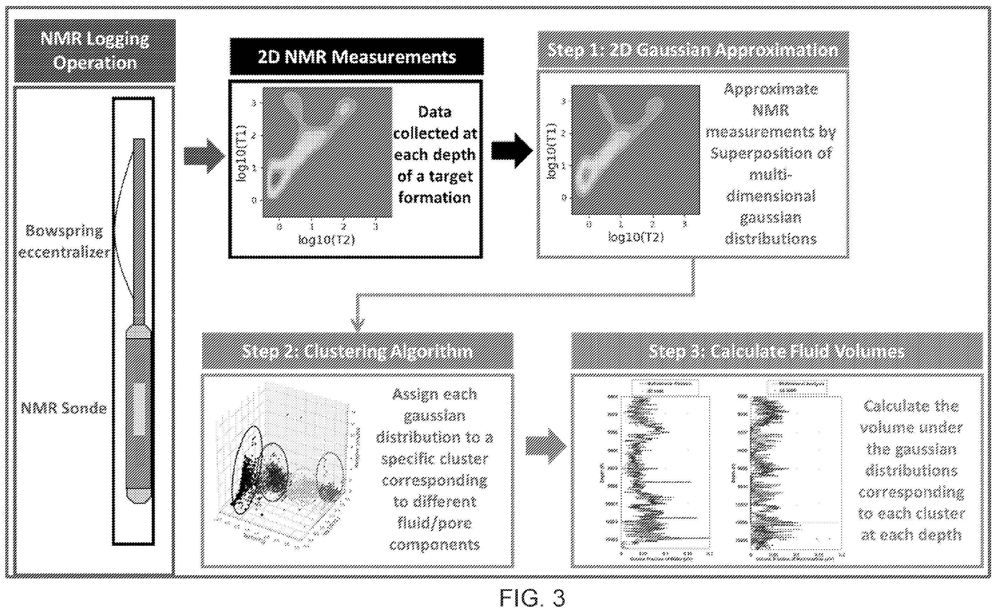

FIG. 3 illustrates an overview of an example process (also referred to as a workflow) of determining at least one petrophysical property, which may be implemented using the system of FIG. 10. FIG. 3, Step 1 of the workflow consists of approximating the NMR maps (e.g., 2D NMR maps) with a superposition of multi-dimensional probability density functions (e.g., gaussian distributions and the like). Although FIG. 3 cites multi-dimensional gaussian distributions, those of skill in the art will appreciate that any probability density functions (PDFs), such as PDFs generated by optimization-based methods, machine learning methods such as neural networks, or statistical methods such as gaussian mixture models can be used for decomposing the maps. In one embodiment, the probability density function approximation is performed at a plurality of measured depths within or including a target formation. FIG. 3, Step 2 includes applying a clustering algorithm to the data space containing the parameters of the probability density functions obtained for the entire logged interval of the target formation. The clustering algorithm may automatically assign each probability density function to a specific cluster that corresponds to different fluid/pore components. FIG. 3, Step 3 implements an algorithm that numerically performs, for example, a double integral over the $T_1$-$T_2$ (or equivalently $D$-$T_2$) domain to calculate the volume under the probability density functions corresponding to each cluster at each depth. The total volume associated with each cluster translates directly into the pore volume corresponding to different fluid components (e.g., hydrocarbon types, water types). Indeed, the workflow of FIG. 3 may be utilized for identifying/tracking fluid components in the wellbore and estimating their corresponding pore volumes uniquely from the interpretation of (e.g., 2D) NMR (e.g., $T_1$-$T_2$, $D$-$T_2$) measurements.

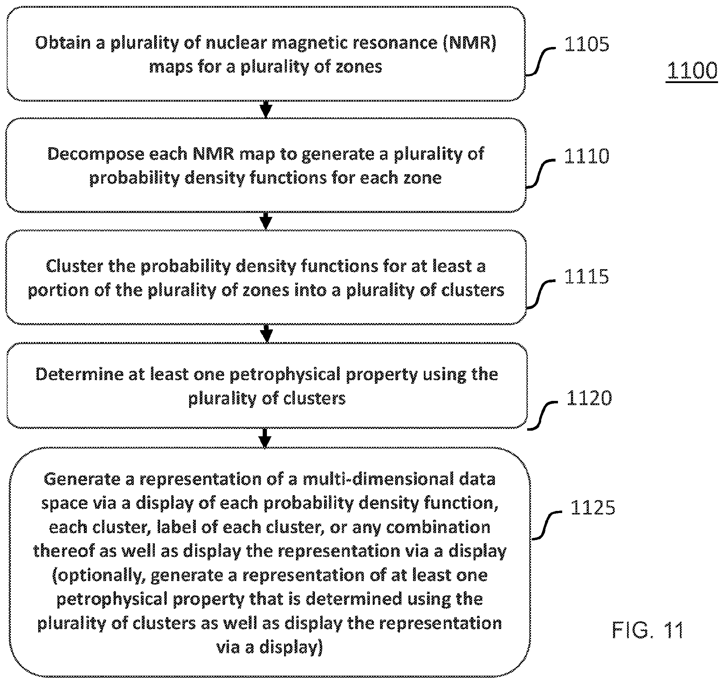

FIG. 11 illustrates a more detailed example process 1100 of determining at least one petrophysical property, which may be implemented using the system of FIG. 10. Those of ordinary skill in the art will appreciate that the principles of the present invention may be implemented in a variety of ways and the scope of the invention is not limited to the embodiments discussed herein. For example, those of ordinary skill in the art will appreciate that the process 1100 can be used for a single well from a single formation in one embodiment. Alternatively, those of ordinary skill in the art will appreciate that the process 1100 can be used for a plurality of wells from a single formation in one embodiment. Alternatively, those of ordinary skill in the art will appreciate that the process 1100 can be used for a plurality of rock types determined from other subsurface measurements (e.g., triple-combo logs, quad-combo logs). The rock types will be used in the cluster portion of the process 1100. Alternatively, those of ordinary skill in the art will appreciate that the process 1100 can be used for a plurality of wells from a plurality of formations in one embodiment. Other alternatives are also possible. Similarly, those of ordinary skill in the art will appreciate that the principles of the present invention may be applied to 3D (e.g., for formations containing heavy hydrocarbon) or higher, and therefore, the scope of the invention is not limited to the 2D embodiments and not limited to the 2D examples provided herein.

At step 1105, the process 1100 includes obtaining a plurality of nuclear magnetic resonance (NMR) maps for a plurality of zones (e.g., depths). In some embodiments, the plurality of NMR maps and the plurality of probability density functions for each zone are two-dimensional (2D). In some embodiments, the plurality of NMR maps and the plurality of probability density functions for each zone are three-dimensional (3D). The NMR maps are generated using an NMR tool, such as an NMR sonde as illustrated in FIG. 3. The NMR tool may also include a bowspring eccentralizer. NMR technology is discussed in the following US Patent Nos.: 83373017, 83370129, 83367262, 83367139, 83366303, 83364950, 83360644, 83357118, 83356782, and 83346842.

At step 1110, the process 1110 includes decomposing each NMR map to generate a plurality of probability density functions for each zone. As indicated at step 1105, in some embodiments, the plurality of NMR maps and the plurality of probability density functions for each zone are two-dimensional (2D). As indicated at step 1105, in some embodiments, the plurality of NMR maps and the plurality of probability density functions for each zone are three-dimensional (3D). For instance, each NMR map (e.g., 2D NMR map) may generate one to twenty probability density functions (e.g., 2D gaussian distributions) for the corresponding zone of the subsurface formation. A single NMR map (e.g., 2D NMR map) for depth 5,000 feet (1,524 m) of the subsurface formation may generate one to twenty probability density functions (e.g., 2D gaussian distributions).

In some embodiments, the decomposing comprises using mean $T_1$ values, mean $T_2$ values, mean diffusion values, amplitudes, variances, covariances, or any combination thereof. In some embodiments, the decomposing comprises using mean $T_1$, mean $T_2$ values, mean diffusion values of each probability density function from mean $\vec{\mu}_i$ values of each probability density function. In some embodiments, peak locations correspond to the mean $\vec{\mu}_i$ values of each probability density function. In some embodiments, the decomposing comprises determining an optimum superposition of probability density functions for each zone by minimizing a difference between the corresponding NMR map and the corresponding superposition of the probability density functions.

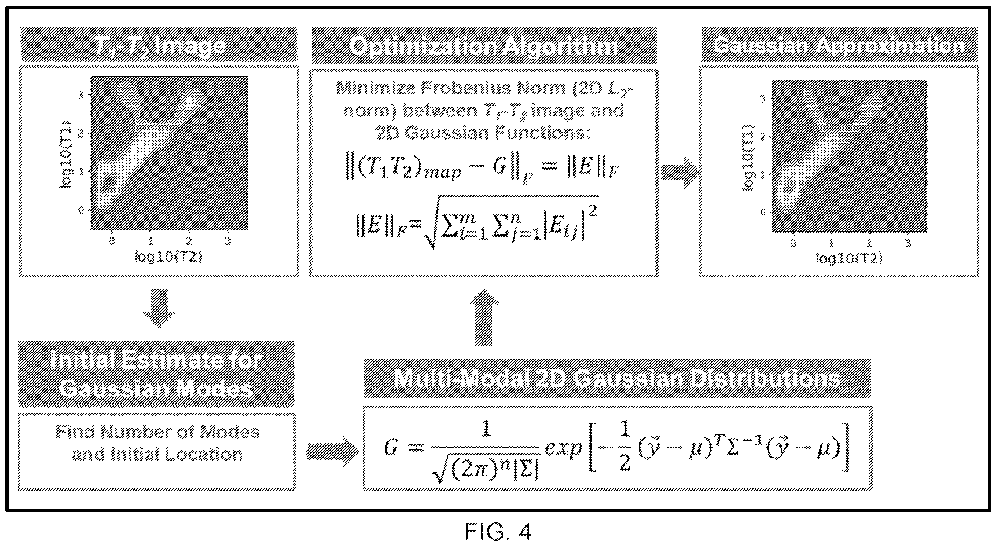

With respect to decomposing, FIG. 4 illustrates one example workflow to determine the optimum number of probability density functions that approximates NMR data (e.g., 2D NMR data) and their corresponding properties (e.g., means, variances) with probability density functions. The application of the example workflow illustrated in FIG. 4 is detailed in the following FIG. 4 steps:

FIG. 4, Step 1: Identify the number of probability density functions (in this example, these are gaussian distributions) necessary to accurately approximate the NMR maps (e.g., 2D NMR maps) and their locations. To this end, the NMR maps (e.g., 2D NMR maps) are treated as images and a maxima filter (e.g., local maxima filter by normalized power-weighted filtering) is applied to identify local peaks. The next step dilates the images corresponding to the NMR maps (e.g., 2D NMR maps) and merges peaks located within a neighborhood with a radius equal to the dilation size (e.g., Stéfan van der Walt, Johannes L. Schönberger, Juan Nunez-Iglesias, François Boulogne, Joshua D. Warner, Neil Yager, Emmanuelle Gouillart, Tony Yu and the scikit-image contributors. scikit-image: Image processing in Python. Peer J 2:e453 (2014). https://doi.org/10.7717/peer.453).

FIG. 4, Step 2: Provide an initial estimate for the superposition of multi-dimensional probability density functions. In one example, this step will also linearize the $T_1$ and $T_2$ scales and map them to a fixed interval. Then, the peak locations identified in FIG. 4, Step 1 of the example workflow of FIG. 4 are converted from pixel units to the linearized $T_1$ and $T_2$ scales. In this embodiment, the peak locations in linear scale correspond to the mean values $\vec{\mu}_i$ of each gaussian distribution $G_i$, mathematically described as illustrated in Equation 3:

Equation 3:

$$G_i = \frac{A_i}{\sqrt{(2\pi)^n |\Sigma_i|}} exp\left[ -\frac{1}{2}(\vec{y} - \vec{\mu}_i)^T \Sigma_i^{-1}(\vec{y} - \vec{\mu}_i) \right]$$

where $n$ is the dimension of the gaussian distribution (i.e., 2), $A_i$ is the amplitude, $\Sigma_i$ is the variance matrix, and $\vec{y}$ correspond to the coordinates in the linearized $T_1 T_2$ domain or any combination of the mean values of the diffusion coefficient, $T_1$, and $T_2$ values. In one example, it is assumed that initial $A_i$ estimates are 0.5 and that the initial estimate for the variance matrix is an identity matrix.

FIG. 4, Step 3: Determine the optimum superposition of multi-dimensional probability density functions (gaussian distributions in this example). This step also includes defining the optimum superposition of gaussian distributions $\sum_{i=1}^{n_g} G_i$ for each measurement (i.e., depth) as the superposition that minimizes the Frobenius norm defined as illustrated in Equation 4:

Equation 4:

$$min \left\| (T_1 T_2)_{map} - \sum_{i=1}^{n_g} G_i \right\|_F = min \|E\|_F$$

where $n_g$ is the number of gaussian distributions determined in Step 1 in FIG. 4 and the Frobenius norm is defined as in Equation 5:

Equation 5:

$$\|E\|_F = \sqrt{\sum_{j=1}^{n_{T_1}} \sum_{k=1}^{n_{T_2}} |E_{jk}|^2}$$

where $n_{T_1}$ and $n_{T_2}$ correspond to the number of $T_1$ and $T_2$ values used in the inversion process to calculate the NMR maps (e.g., 2D NMR maps). To minimize $\|E\|_F$, a conjugate direction method was applied using $A_i$, $\vec{\mu}_i$, and $\Sigma_i$ as optimization variables. If the conjugate direction method fails to converge to a local minimum, this step may restart the optimization process using the Sequential Least Squares Programming (SLSQP) method.

At step 1115, the process 1100 includes clustering the probability density functions for at least a portion of the plurality of zones into a plurality of clusters. The clustering component 106 may be configured to cluster the probability density functions for at least a portion of the plurality of zones into a plurality of clusters. In some embodiments, an unsupervised clustering algorithm is utilized for the clustering. The unsupervised clustering algorithm utilized for the clustering includes assigning each cluster to a fluid type and a pore type. In some embodiments, a supervised clustering algorithm is utilized for the clustering. The supervised clustering algorithm utilized for the clustering includes assigning each cluster to a fluid type and a pore type. In some embodiments, the clustering comprises creating a multi-dimensional (e.g., 3D or higher) data space using: pore volume fraction of each probability density function; coordinates of mean $T_1$ values, mean $T_2$ values, mean diffusion values, or any combination thereof of each probability density function; amplitudes, variances, covariances, or any combination thereof; or any combination thereof. In some embodiments, the clustering comprises using a clustering algorithm, and the clustering algorithm comprises Mini-Batch, K-Means, Affinity Propagation, Mean Shift, Spectral Clustering, Ward Hierarchical method, Agglomerative Clustering, DBSCAN, OPTICS, BIRCH, Gaussian Mixture, or any combination thereof. In some embodiments, the clustering comprises using a clustering algorithm, and it also comprises: obtaining a user defined number of clusters to characterize fluid types and pore types; and using the user defined number of clusters as an input to the clustering algorithm.

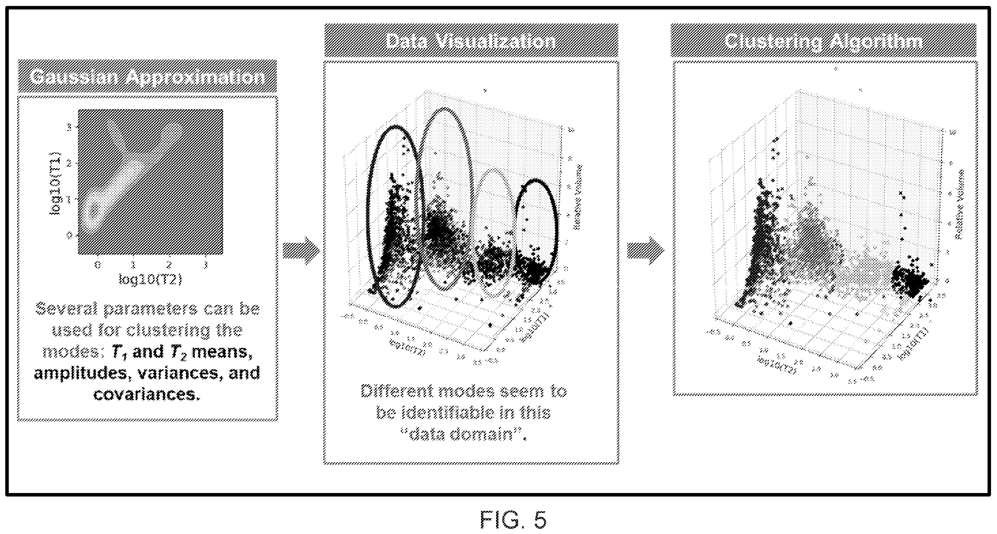

With respect to clustering, FIG. 5 illustrates one example workflow of assigning probability density functions (in this example, gaussian distributions) to corresponding fluid/pore type clusters. After identifying the optimum multi-dimensional gaussian approximation at every depth interval, the individual gaussian components are assigned to corresponding pore/fluid type. The number of pore/fluid types can vary from one depth interval to the next even within the same formation and, consequently, the optimum number of gaussian functions necessary to accurately characterize the NMR maps (e.g., 2D NMR maps) can vary as well. Therefore, tracking the modes along the well can be challenging. A clustering algorithm may be applied to assign each gaussian distribution to a specific pore/fluid component as illustrated in FIG. 5. The application of the workflow illustrated in FIG. 5 is detailed in the following FIG. 5 steps

FIG. 5, Step 1: Create a multi-dimensional data space (e.g., 3D dimensional data space) using the parameter of the gaussian distributions. First, the mean $T_1$ and $T_2$ values for each gaussian distribution may be obtained from the $\vec{\mu}_i$ values, which are calculated in a linearized scale as detailed herein. The $T_1 \times T_2$ coordinates are a natural choice since they provide information about the pore and fluid types. Alternatively, one example could utilize the coordinates of the mean values of the diffusion coefficient, $T_1$, and $T_2$ (in 3D applications), or any combination thereof. The data space is created by incorporating the volume fraction of each gaussian distribution (or alternatively, amplitude, variances, covariances, or any combination thereof) in addition to the $T_1 \times T_2$ (or any combination of the mean values of the diffusion coefficient, $T_1$, and $T_2$ values) coordinates of their corresponding means.

FIG. 5, Step 2: Optionally, FIG. 5 includes visualizing the generated multi-dimensional data space (e.g., 3D data space). Data space visualization by a user may enable two objectives: (1) to ensure that clusters are visually identifiable in the multi-dimensional data space (e.g., 3D dimensional space) and (2) provide an estimate of the number of clusters necessary to characterize the dominant pore/fluid types, which can be used as an input to the clustering algorithm. The first objective is quality control for the multi-dimensional data space (e.g., 3D data space).

FIG. 5, Step 3: Obtain the clusters associated with the dominant pore/fluid types in the target formation. A clustering algorithm (e.g., a spectral clustering algorithm such as e.g., Yu, Stella, X. and Shi, J., 2003, October. Multiclass spectral clustering. Computer Science; Proceedings Ninth IEEE International Conference on Computer Vision (p. 313); e.g., Von Luxburg, U., 2007. A tutorial on spectral clustering. Statistics and computing, 17(4), pp 395-416) may be applied to the multi-dimensional data space (e.g., 3D data space) obtained at FIG. 5, Step 1 using as an input a user-defined number of clusters. Furthermore, the affinity matrix may be constructed using a radial basis function (RBF) kernel (i.e., squared exponential function) (e.g., Williams, C.K. and Rasmussen, C.E., 2006. Gaussian processes for machine learning (Vol. 2, No. 3, p. 4). Cambridge, MA: MIT press). Spectral clustering is a powerful and flexible technique, but it has high memory requirements which might limit the maximum size of the target data space. FIG. 5, Step 4: Optionally, FIG. 5 includes visualizing the clusters in the multi-dimensional data space (e.g., 3D data space). After the clustering algorithm assigns each gaussian distribution to a specific cluster, the clusters for the entire formation in the multi-dimensional space (e.g., 3D data space) may be visualized. In this step, a user may confirm that the clustering algorithm automatically identified clusters that are consistent with what has been visually identified in FIG. 5, Step 2, such as by the same user or a different user. In case it has not, the multi-dimension data space may be updated in terms of the number of classes and/or re-scale the axes, and FIG. 5, Step 3 may be repeated.

At step 1120, the process 1100 includes determining at least one petrophysical property using the plurality of clusters. The at least one petrophysical property comprises fluid component, pore volume, pore type, hydrocarbon saturation, water saturation, or any combination thereof. The fluid component comprises bound water, free water, hydrocarbon, or any combination thereof. Bound water in this context can be any bound water such as, but not limited to, clay bound water, capillary bound water, etc. Free water in this context can be any free water such as, but not limited to, any movable water. Hydrocarbon in this context can be any hydrocarbon that may be encountered such as, but not limited to, heavy hydrocarbon, light hydrocarbon, etc. Of note, "water" in this context may be practically any water that may be encountered, and thus, water may comprise sea water, brackish water, flowback or produced water, wastewater (e.g., reclaimed or recycled), brine (e.g., reservoir or synthetic brine), fresh water (e.g., fresh water comprises < 1,000 ppm TDS water), or any combination thereof. In some embodiments, determining a pore volume of a particular fluid component corresponding to a particular cluster comprises summing each pore volume of each probability density function in the particular cluster.

With respect to determining, one embodiment using gaussian distributions calculates the volume fraction corresponding to each cluster at each depth. For example, the pore volumes associated with the pore/fluid types, $V_T$, may be determined from the total volume of the gaussian distributions as in Equation 6:

Equation 6:

$$V_T = \sum_{j=1}^{n_{T_1}} \sum_{k=1}^{n_{T_2}} \sum_{i=1}^{i \in c_T} G_i(j,k)$$

where $c_T$ corresponds to the indices of the gaussian distributions associated with cluster $c_T$. In some embodiments, techniques known to those of ordinary skill in the art may be utilized to determine at least one petrophysical property comprising fluid component, pore volume, pore type, hydrocarbon saturation, water saturation, or any combination thereof, for example as described in the following reference. Sun, B., Skalinski, M., Brantjes, J., Liu, C., LaTorraca, G.A., Menard, G. and Dunn, K.J., 2008, December. Accurate NMR fluid typing using functional T1/T2 ratio and fluid component decomposition. In IPTC 2008: International Petroleum Technology Conference (pp. cp-148). European Association of Geoscientists & Engineers.

At step 1125, the process 1100 include generating a representation of a multi-dimensional data space of each probability density function, each cluster, label of each cluster, or any combination thereof as well as displaying the representation via a display. At step 1125, the process 1100 may also include generating a representation of at least one petrophysical property that is determined using the plurality of clusters as well as displaying the representation via a display. For example, the visual representation may be displayed using the graphical display 14 in FIG. 10.

__EXAMPLES:__ This section includes results obtained by testing some embodiments provided herein to estimate porosity, volume fraction of hydrocarbon, and volume fraction of water. Although the following examples use gaussian distributions, it should be understood that any probability density function could be used in the process. To verify the reliability of some embodiments provided herein, datasets were selected from two unconventional formations with complex lithology: example formation 1 and example formation 2. For example formation 1, an example of the superposition of multi-dimensional gaussian distributions approximating the 2D NMR maps is presented. Next, this section provides a discussion of the results obtained from the application of the spectral clustering algorithm to the data space containing the means and amplitudes of all the gaussian distributions in the entire logged interval. Finally, the porosity, volume fraction of hydrocarbon, and volume fraction of water estimated from some embodiments provided herein are compared against the results obtained from multi-mineral analysis. Similar results were obtained for example formation 2.

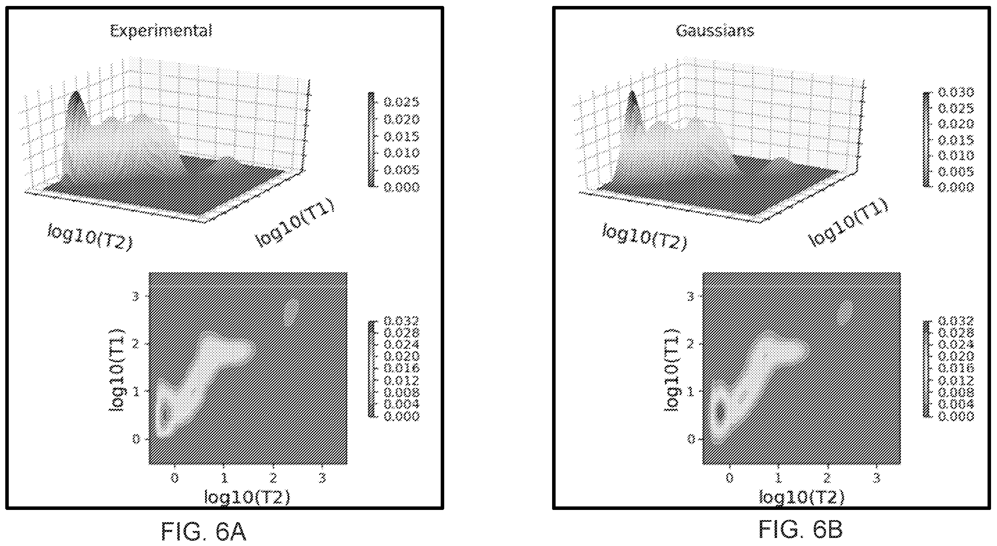

Example Formation 1: The selected example formation 1 dataset contains 725 2D NMR maps across three separate depth intervals. It was verified that the inversion algorithm that automatically approximates the 2D NMR maps with a superposition of gaussian functions is robust and reliable. FIGS. 6A-6B compare the original 2D NMR maps obtained from a standard inversion algorithm against its corresponding superposition of gaussian functions. It is important to notice that the actual 2D NMR maps might not be perfectly described by a superposition of gaussian distributions. Even though the proposed approximation is a model abstraction with intrinsic associated uncertainties, the approximations agree well with all the 2D NMR maps analyzed.

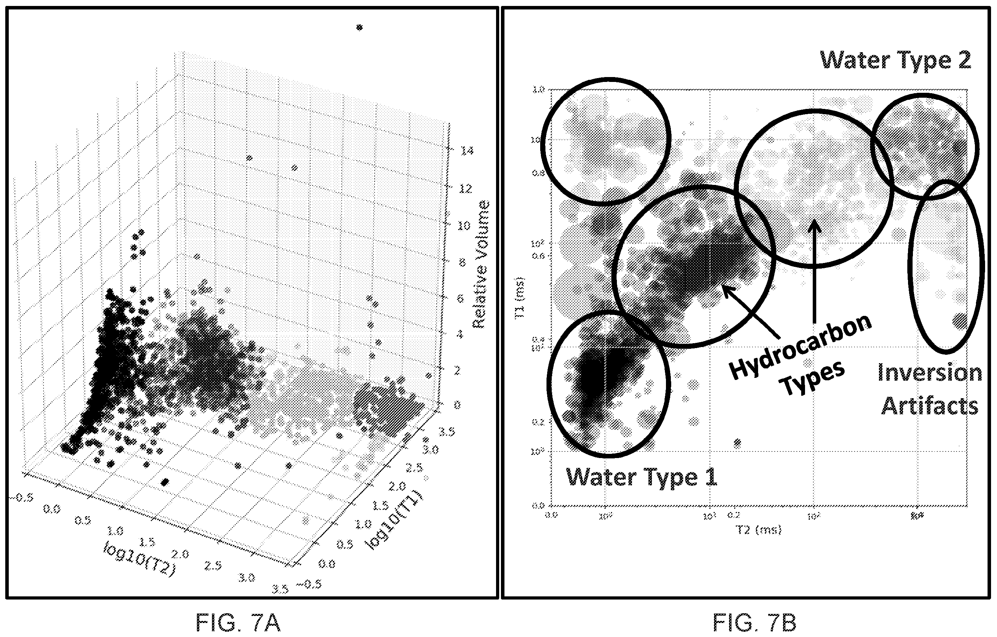

After obtaining the parameters of the gaussian distributions for the entire logged interval and inspecting the data space, 7 different pore/fluid types were defined. Next, the spectral clustering algorithm was applied with a pre-defined number of clusters (i.e., 7). FIG. 7A illustrates the clustering results for the 3D data space including all the analyzed data.

Bound water, hydrocarbon, and free/non-wetting water are represented in FIG. 7A. Inversion artifacts are also illustrated. The water $T_1$ and $T_2$ means of the gaussian distributions associated with the water phase tend to approximately follow the 45° line in the $T_1 \times T_2$ space or $T_1$ values lower than 15 ms. The $T_1/T_2$ ratio of hydrocarbon phase can be two to four times greater than that of water or more than an order of magnitude for heavy hydrocarbon. FIG. 7B shows the projection of the 3D dataspace into the $T_1 \times T_2$ space. It is possible to observe overlap between adjacent pore/fluid types in the 2D projection of the 3D dataset, however the clustering results can be clearly identified by visual inspection in the 3D dataspace.

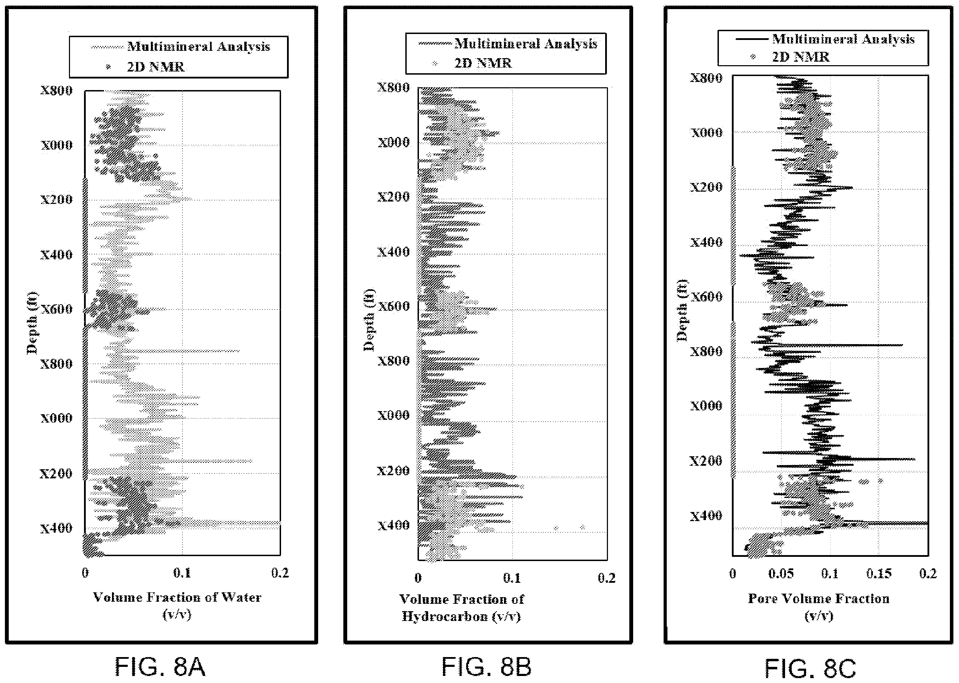

Finally, the pore volumes associated with the pore/fluid types at each depth were obtained by calculating the total volume of the gaussian distributions corresponding to each cluster separately. The total porosity corresponds to the sum of all the calculated pore volumes. FIGS. 8A-8C compare the volume fraction of water, the volume fraction of hydrocarbon, and the pore volume fraction estimated from some embodiments provided herein against the results obtained from multi-mineral analysis.

The results obtained from some embodiments provided herein for the example formation 1 agree well with the corresponding results obtained from the standard petrophysical interpretation workflow (i.e., multi-mineral analysis). It is also important to notice that the multi-mineral analysis workflow relies on a combination of well-logs (e.g., quad combo) with varying tool resolution and depths of investigation (from a few inches to several feet, with 1 inch = 2.54 cm, and 1 foot = 0.3048 m). The instant results, on the other hand, rely solely on NMR measurements that typically survey only a few inches into the formations. Therefore, discrepancies between both approaches are expected as an inherent outcome of the disparate physics associated with the corresponding well-logging tools. Furthermore, the standard petrophysical interpretation workflow requires comprehensive model calibration which might be time consuming and/or expensive.

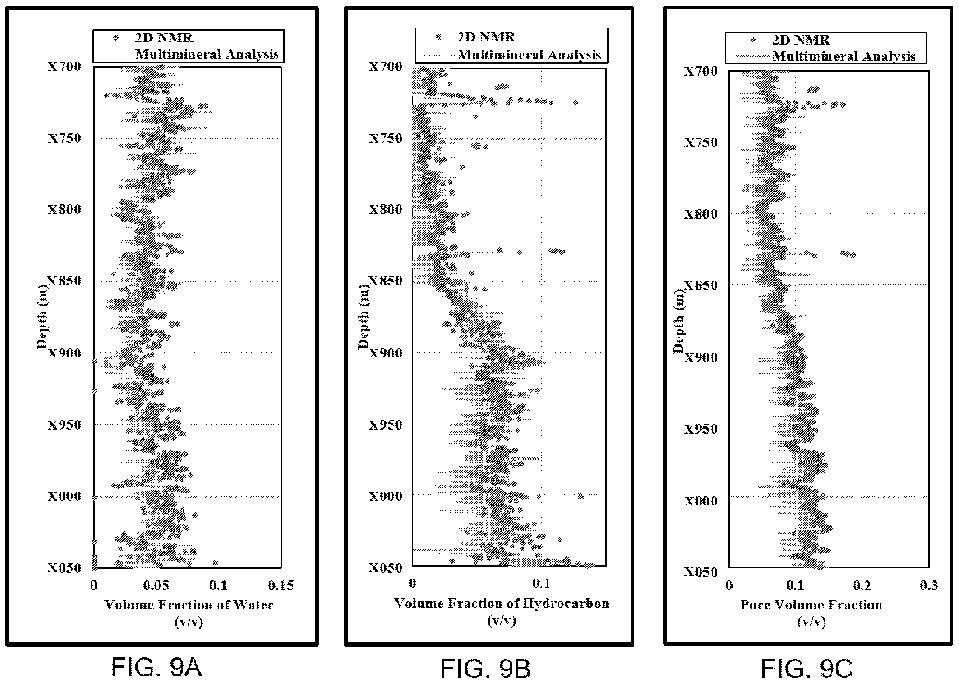

Example Formation 2: Embodiments provided herein (e.g., gaussian approximations, clustering algorithm, and calculation of the volume fractions) were applied to the selected example formation 2 dataset, containing 1235 2D NMR maps along the well. In this case, however, 10 different pore/fluid types were defined. FIGS. 9A-9C compares the volume fraction of water, the volume fraction of hydrocarbon, and the pore volume fraction estimated from some embodiments provided herein against the results obtained from multi-mineral analysis. As illustrated in FIGS. 9A-9C, the results obtained from some embodiments provided herein for the example formation 2 agree well with the corresponding results obtained from the standard petrophysical interpretation workflow.

In conclusion, some embodiments provided herein may be utilized for tracking fluid components in the wellbore and estimating their corresponding pore volumes uniquely from the interpretation of 2D NMR (e.g., $T_1$-$T_2$, $D$-$T_2$) measurements or 3D NMR measurements. First, some embodiments provided herein may be capable of approximating the multi-dimensional NMR maps (e.g., 2D NMR maps) with a superposition of multi-dimensional gaussian distributions. Some embodiments provided herein may automatically determine the optimum number of gaussian distributions and their corresponding properties (i.e., amplitudes, variances, and means) without resorting to user-defined inputs or constraints. Next, a clustering algorithm (e.g., a spectral clustering technique) may be implemented to the data space containing the parameters of the gaussian distributions obtained for a multitude of logged interval. Each gaussian distribution was assigned to a specific cluster corresponding to different fluid/pore components. Then, some embodiments provided herein may be implemented to numerically perform a double integral over the $T_1$-$T_2$ (or equivalently $D$-$T_2$) domain to calculate the volume under the gaussian distributions corresponding to each cluster at each depth. The total volume associated with each cluster translates directly into the pore volume corresponding to different fluid components (e.g., hydrocarbon types, water types).

The reliability of water and hydrocarbon pore volumes estimated by some embodiments provided herein were verified using well-log data obtained from the example formation 1 and the example formation 2. The fluid volumes estimated by some embodiments provided herein agreed well with the fluid volumes estimated by multi-mineral analysis in both example formations. It is relevant to note that, in contrast to the standard petrophysical interpretation techniques (i.e., multi-mineral analysis), the embodiments provided herein do not require calibration efforts, user defined inputs, or proprietary datasets. Furthermore, the approximation of 2D NMR data with a superposition of gaussian distributions improves the accuracy of estimated pore volumes of fluid components with overlapping NMR responses. Finally, the spectral clustering technique using the parameters of the gaussian distributions as inputs enables depth-tracking of different fluid components without making use of user-defined 2D cutoffs. Therefore, some embodiments provided herein are promising for enhancing petrophysical interpretation in formations with complex mineralogy and pore structure and improving the reliability of pore/fluid typing and assessment of fluid volumes.

While particular embodiments are described above, it will be understood it is not intended to limit the invention to these particular embodiments. On the contrary, the invention may include modifications as long as they fall under the scope of the invention which is determined by the appended claims. Numerous specific details are set forth in order to provide a thorough understanding of the subject matter presented herein. But it will be apparent to one of ordinary skill in the art that the subject matter may be practiced without these specific details. In other instances, well-known methods, procedures, components, and circuits have not been described in detail so as not to unnecessarily obscure aspects of the embodiments.

The terminology used in the description of the invention herein is for the purpose of describing particular embodiments only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, operations, elements, and/or components, but do not preclude the presence or addition of one or more other features, operations, elements, components, and/or groups thereof.

The use of the term "about" applies to all numeric values, whether or not explicitly indicated. This term generally refers to a range of numbers that one of ordinary skill in the art would consider as a reasonable amount of deviation to the recited numeric values (i.e., having the equivalent function or result). For example, this term can be construed as including a deviation of $\pm 10$ percent of the given numeric value provided such a deviation does not alter the end function or result of the value. Therefore, a value of about 1% can be construed to be a range from 0.9% to 1.1%. Furthermore, a range may be construed to include the start and the end of the range. For example, a range of 10% to 20% (i.e., range of 10%-20%) includes 10% and also includes 20%, and includes percentages in between 10% and 20%, unless explicitly stated otherwise herein. Similarly, a range of between 10% and 20% (i.e., range between 10% - 20%) includes 10% and also includes 20%, and includes percentages in between 10% and 20%, unless explicitly stated otherwise herein.

It is understood that when combinations, subsets, groups, etc. of elements are disclosed (e.g., combinations of components in a composition, or combinations of steps in a method), that while specific reference of each of the various individual and collective combinations and permutations of these elements may not be explicitly disclosed, each is specifically contemplated and described herein. By way of example, if an item is described herein as including a component of type A, a component of type B, a component of type C, or any combination thereof, it is understood that this phrase describes all of the various individual and collective combinations and permutations of these components. For example, in some embodiments, the item described by this phrase could include only a component of type A. In some embodiments, the item described by this phrase could include only a component of type B. In some embodiments, the item described by this phrase could include only a component of type C. In some embodiments, the item described by this phrase could include a component of type A and a component of type B. In some embodiments, the item described by this phrase could include a component of type A and a component of type C. In some embodiments, the item described by this phrase could include a component of type B and a component of type C. In some embodiments, the item described by this phrase could include a component of type A, a component of type B, and a component of type C. In some embodiments, the item described by this phrase could include two or more components of type A (e.g., A1 and A2). In some embodiments, the item described by this phrase could include two or more components of type B (e.g., B1 and B2). In some embodiments, the item described by this phrase could include two or more components of type C (e.g., C1 and C2). In some embodiments, the item described by this phrase could include two or more of a first component (e.g., two or more components of type A (A1 and A2)), optionally one or more of a second component (e.g., optionally one or more components of type B), and optionally one or more of a third component (e.g., optionally one or more components of type C). In some embodiments, the item described by this phrase could include two or more of a first component (e.g., two or more components of type B (B1 and B2)), optionally one or more of a second component (e.g., optionally one or more components of type A), and optionally one or more of a third component (e.g., optionally one or more components of type C). In some embodiments, the item described by this phrase could include two or more of a first component (e.g., two or more components of type C (C1 and C2)), optionally one or more of a second component (e.g., optionally one or more components of type A), and optionally one or more of a third component (e.g., optionally one or more components of type B).

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Although some of the various drawings illustrate a number of logical stages in a particular order, stages that are not order dependent may be reordered and other stages may be combined or broken out. While some reordering or other groupings are specifically mentioned, others will be obvious to those of ordinary skill in the art and so do not present an exhaustive list of alternatives. Moreover, it should be recognized that the stages could be implemented in hardware, firmware, software or any combination thereof.

The description herein, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

Unless defined otherwise, all technical and scientific terms used herein have the same meanings as commonly understood by one of skill in the art to which the disclosed invention belongs.

Anand, V., Ali, M.R., Al-Adani, N., Willis, D., Freedman, R., Hamichi, F., Abubakar, A., Grover, R., Neto, O., Aboud, M. and Iglesias, J.G., 2015, August. New generation NMR tool for robust, continuous T1 and T2 measurements. In SPWLA 56th Annual Logging Symposium. Society of Petrophysicists and Well-Log Analysts.

Bloembergen, N., Purcell, E.M. and Pound, R.V., 1948. Relaxation effects in nuclear magnetic resonance absorption. Physical review, 73(7), p.679.

Garcia, A.P., Han, Y. and Heidari, Z., 2018. Integrated Workflow to Estimate Permeability Through Quantification of Rock Fabric Using Joint Interpretation of Nuclear Magnetic Resonance and Electric Measurements. Petrophysics, 59(05), pp.672-693.

Garcia*, A. P. and Heidari, Z. 2021. A New Multiphysics Method for Simultaneous Assessment of Permeability and Saturation-Dependent Capillary Pressure in Hydrocarbon-Bearing Rocks. SPE Journal 26 (1): 155 - 171. DOI: 10.2118/195468-PA.Jiang, T., Rylander, E., Singer, P.M., Lewis, R.E. and Sinclair, S.M., 2013, January. Integrated petrophysical interpretation of eagle ford shale with 1-D and 2-D nuclear magnetic resonance (NMR). In SPWLA 54th annual logging symposium. Society of Petrophysicists and Well-Log Analysts. Ozen, A.E. and Sigal, R.F., 2013. T1/T2 NMR surface relaxation ratio for hydrocarbons and brines in contact with mature organic-shale reservoir rocks. Petrophysics, 54(01), pp.11-19.

Stéfan van der Walt, Johannes L. Schönberger, Juan Nunez-Iglesias, François Boulogne, Joshua D. Warner, Neil Yager, Emmanuelle Gouillart, Tony Yu and the scikit-image contributors. scikit-image: Image processing in Python. PeerJ 2:e453 (2014) https://doi.org/10.7717/peerj.453.

Sun, B., Skalinski, M., Brantjes, J., Liu, C., LaTorraca, G.A., Menard, G. and Dunn, K.J., 2008, December. Accurate NMR fluid typing using functional T1/T2 ratio and fluid component decomposition. In IPTC 2008: International Petroleum Technology Conference (pp. cp-148). European Association of Geoscientists & Engineers.

Sun, B., Yang, E., Wang, H., Seltzer, S.J., Montoya, V., Crowe, J. and Malizia, T., 2016, June. Using NMR to characterize fluids in tight rock unconventional and shale formations. In SPWLA 57th Annual Logging Symposium. Society of Petrophysicists and Well-Log Analysts.

Venkataramanan, L., Evirgen, N., Allen, D.F., Mutina, A., Cai, Q., Johnson, A.C., Green, A.Y. and Jiang, T., 2018. An Unsupervised Learning Algorithm to Compute Fluid Volumes From NMR T1-T2 Logs in Unconventional Reservoirs. Petrophysics, 59(05), pp.617-632.

Von Luxburg, U., 2007. A tutorial on spectral clustering. Statistics and computing, 17(4), pp.395-416.

Williams, C.K. and Rasmussen, C.E., 2006. Gaussian processes for machine learning (Vol. 2, No. 3, p. 4). Cambridge, MA: MIT press.

Xie, Z.H. and Gan, Z., 2019, January. Investigation of Physical Properties of Hydrocarbons in Unconventional Mudstones Using Two-Dimensional NMR Relaxometry. In SPWLA 60th Annual Logging Symposium. Society of Petrophysicists and Well-Log Analysts.

Yu, Stella, X. and Shi, J., 2003, October. Multiclass spectral clustering. Computer Science; Proceedings Ninth IEEE International Conference on Computer Vision (p. 313).

## Claims

1. A computer-implemented method (1100) of determining at least one petrophysical property, the method (1100) comprising:

   obtaining (1105) a plurality of nuclear magnetic resonance, NMR, maps generated using an NMR tool for a plurality of zones of a subsurface formation;
   decomposing (1110) each NMR map to generate a plurality of probability density functions for each zone;
   clustering (1115) the probability density functions for at least a portion of the plurality of zones into a plurality of clusters; and

determining (1120) at least one petrophysical property using the plurality of clusters,

**characterized in that**

the decomposing (1110) comprises using an optimization-based method to determine a superposition of probability density functions, wherein an optimum superposition of probability density functions for each zone is determined by minimizing a difference between the corresponding NMR map and a corresponding superposition of the probability density functions.

2. The method (1100) of claim 1, wherein:

the plurality of NMR maps and the plurality of probability density functions for each zone are two-dimensional, 2D; or

the plurality of NMR maps and the plurality of probability density functions for each zone are three-dimensional, 3D; or

the plurality of NMR maps each comprise $T_1$ and $T_2$ values.

3. The method (1100) of claim 1, wherein an unsupervised clustering algorithm is utilized for the clustering (1115), and optionally wherein the unsupervised clustering algorithm utilized for the clustering (1115) includes assigning each cluster to a fluid type and a pore type.

4. The method (1100) of claim 1, wherein a supervised clustering algorithm is utilized for the clustering (1115), and optionally wherein the supervised clustering algorithm utilized for the clustering (1115) includes assigning each cluster to a fluid type and a pore type.

5. The method (1100) of claim 1, wherein the decomposing (1110) comprises using mean $T_1$ values, mean $T_2$ values, mean diffusion values, amplitudes, variances, covariances, or any combination thereof.

6. The method (1100) of claim 1, wherein the decomposing (1110) comprises using mean $T_1$, mean $T_2$ values, mean diffusion values of each gaussian distribution from mean $\vec{\mu_i}$ values of each probability density function, and optionally wherein peak locations correspond to the mean $\vec{\mu_i}$ values of each probability density function.

7. The method (1100) of claim 1, wherein the clustering (1115) comprises creating a multi-dimensional data space using:

pore volume fraction of each probability density function;

coordinates of mean $T_1$ values, mean $T_2$ values, mean diffusion values, or any combination thereof of each probability density function;

amplitudes, variances, covariances, or any combination thereof;

or any combination thereof.

8. The method (1100) of claim 1, wherein the clustering (1115) comprises using a clustering algorithm, wherein:

the clustering algorithm comprises Mini-Batch, K-Means, Affinity Propagation, Mean Shift, Spectral Clustering, Ward Hierarchical method, Agglomerative Clustering, DBSCAN, OPTICS, BIRCH, Gaussian Mixture, or any combination thereof; or

the method (1100) further comprises:

obtaining a user defined number of clusters to characterize fluid types and pore types; and

using the user defined number of clusters as an input to the clustering algorithm.

9. The method (1100) of claim 1, further comprising:

generating (1125) a representation of a multi-dimensional data space via a display of each probability density function, each cluster, label of each cluster, or any combination thereof; and

displaying the representation via a display.

10. The method (1100) of claim 1, further comprising:

generating a representation of the at least one petrophysical property that is determined using the plurality of clusters; and
displaying the representation via a display.

11. The method (1100) of claim 1, wherein the at least one petrophysical property comprises fluid type, fluid component volume, pore volume, pore type, hydrocarbon saturation, water saturation, or any combination thereof, and optionally wherein the fluid component comprises bound water, free water, hydrocarbon, or any combination thereof.

12. The method (1100) of claim 1, wherein:

determining a pore volume of a particular fluid component corresponding to a particular cluster comprises summing each pore volume of each probability density function in the particular cluster; or
obtaining (1105) the plurality of NMR maps comprises generating at least a portion of the NMR maps using an inversion algorithm; or
clustering (1115) the probability density functions comprises using rock types.

13. A computer system (10), comprising:

one or more processors (11);
memory; and
one or more programs, wherein the one or more programs are stored in the memory and configured to be executed by the one or more processors (11), the one or more programs including instructions that when executed by the one or more processors cause the system to execute any one of claims 1 to 12.

14. One or more computer programs comprising instructions which, when executed by a computer, cause the computer to carry out the method of any of claims 1 to 12.

15. A non-transitory computer readable storage medium storing the one or more computer programs of claim 14.

**Patentansprüche**

1. Computerimplementiertes Verfahren (1100) zum Bestimmen mindestens einer petrophysikalischen Eigenschaft, das Verfahren (1100) umfassend:

Erhalten (1105) einer Vielzahl von Kernspinresonanz(NMR)-Karten, die unter Verwendung eines NMR-Werkzeugs für eine Vielzahl von Zonen einer unterirdischen Formation erzeugt werden;
Zerlegen (1110) jeder NMR-Karte, um eine Vielzahl von Wahrscheinlichkeitsdichtefunktionen für jede Zone zu erzeugen;
Clustern (1115) der Wahrscheinlichkeitsdichtefunktionen für mindestens einen Teil der Vielzahl von Zonen in eine Vielzahl von Clustern; und
Bestimmen (1120) mindestens einer petrophysikalischen Eigenschaft unter Verwendung der Vielzahl von Clustern,
**dadurch gekennzeichnet, dass**
das Zerlegen (1110) das Verwenden eines optimierungsbasierten Verfahrens zum Bestimmen einer Überlagerung von Wahrscheinlichkeitsdichtefunktionen umfasst, wobei eine optimale Überlagerung von Wahrscheinlichkeitsdichtefunktionen für jede Zone durch Minimieren einer Differenz zwischen der entsprechenden NMR-Karte und einer entsprechenden Überlagerung der Wahrscheinlichkeitsdichtefunktionen bestimmt wird.

2. Verfahren (1100) nach Anspruch 1, wobei:

die Vielzahl von NMR-Karten und die Vielzahl von Wahrscheinlichkeitsdichtefunktionen für jede Zone zweidimensional (2D) sind; oder
die Vielzahl von NMR-Karten und die Vielzahl von Wahrscheinlichkeitsdichtefunktionen für jede Zone dreidimensional (3D) sind; oder
die Vielzahl von NMR-Karten jeweils $T_1$- und $T_2$-Werte umfassen.

3. Verfahren (1100) nach Anspruch 1, wobei ein nicht überwachter Clusteralgorithmus für das Clustern (1115) verwendet wird,
und wobei optional der unüberwachte Clusteralgorithmus, der für das Clustern (1115) verwendet wird, das Zuweisen jedes Clusters zu einem Fluidtyp und einem Porentyp beinhaltet.

4. Verfahren (1100) nach Anspruch 1, wobei ein überwachter Clusteralgorithmus für das Clustern (1115) verwendet wird,
und wobei optional der überwachte Clusteralgorithmus, der für das Clustern (1115) verwendet wird, das Zuweisen jedes Clusters zu einem Fluidtyp und einem Porentyp beinhaltet.

5. Verfahren (1100) nach Anspruch 1, wobei das Zerlegen (1110) das Verwenden von mittleren $T_1$-Werten, mittleren $T_2$-Werten, mittleren Diffusionswerten, Amplituden, Varianzen, Kovarianzen oder eine beliebige Kombination daraus umfasst.

6. Verfahren (1100) nach Anspruch 1, wobei das Zerlegen (1110) das Verwenden von mittleren $T_1$-Werten, mittleren $T_2$-Werten, mittleren Diffusionswerten jeder Gauß-Verteilung aus mittleren $\vec{\mu}_i$-Werten für jede Wahrscheinlichkeitsdichtefunktion umfasst,
und wobei optional Spitzenpositionen den mittleren $\vec{\mu}_i$-Werten jeder Wahrscheinlichkeitsdichtefunktion entsprechen.

7. Verfahren (1100) nach Anspruch 1, wobei das Clustern (1115) das Erzeugen eines mehrdimensionalen Datenraums umfasst, unter Verwendung von:

Porenvolumenanteil jeder Wahrscheinlichkeitsdichtefunktion;
Koordinaten von mittleren $T_1$-Werten, mittleren $T_2$-Werten, mittleren Diffusionswerten oder einer beliebigen Kombination daraus von jeder Wahrscheinlichkeitsdichtefunktion;
Amplituden, Varianzen, Kovarianzen oder eine beliebige Kombination daraus;
oder eine beliebige Kombination daraus.

8. Verfahren (1100) nach Anspruch 1, wobei das Clustern (1115) das Verwenden eines Clusteralgorithmus umfasst, wobei:

der Clusteralgorithmus Mini-Batch, K-Mean, Affinitätspropagation, Mittelwertverschiebung, spektrales Clustern, Hierarchisches Ward-Verfahren, agglomeratives Clustern, DBSCAN, OPTICS, BIRCH, Gaußsches Mischen oder eine beliebige Kombination daraus umfasst; oder
das Verfahren (1100) ferner umfasst:

Erhalten einer benutzerdefinierten Anzahl von Clustern, um Fluidtypen und Porentypen zu charakterisieren; und
Verwenden der benutzerdefinierten Anzahl von Clustern als Eingabe für den Clusteralgorithmus.

9. Verfahren (1100) nach Anspruch 1, ferner umfassend:

Erzeugen (1125) einer Repräsentation eines mehrdimensionalen Datenraums über eine Anzeige jeder Wahrscheinlichkeitsdichtefunktion, jedes Clusters, einer Markierung jedes Clusters oder einer beliebigen Kombination daraus; und
Anzeigen der Repräsentation über eine Anzeige.

10. Verfahren (1100) nach Anspruch 1, ferner umfassend:

Erzeugen einer Repräsentation der mindestens einen petrophysikalischen Eigenschaft, die unter Verwendung der Vielzahl von Clustern bestimmt wird; und
Anzeigen der Repräsentation über eine Anzeige.

11. Verfahren (1100) nach Anspruch 1, wobei die mindestens eine petrophysikalische Eigenschaft Fluidtyp, Fluidkomponentenvolumen, Porenvolumen, Porentyp, Kohlenwasserstoffsättigung, Wassersättigung oder eine beliebige Kombination daraus umfasst,
und wobei optional die Fluidkomponente gebundenes Wasser, freies Wasser, Kohlenwasserstoff oder eine beliebige Kombination daraus umfasst.

12. Verfahren (1100) nach Anspruch 1, wobei:

das Bestimmen eines Porenvolumens einer bestimmten Fluidkomponente, die einem bestimmten Cluster entspricht, das Summieren jedes Porenvolumens jeder Wahrscheinlichkeitsdichtefunktion in dem bestimmten Cluster umfasst; oder

das Erhalten (1105) der Vielzahl von NMR-Karten das Erzeugen mindestens eines Teils der NMR-Karten unter Verwendung eines Inversionsalgorithmus umfasst; oder

das Clustern (1115) der Wahrscheinlichkeitsdichtefunktionen das Verwenden von Gesteinstypen umfasst.

13. Computersystem (10), umfassend:

einen oder mehrere Prozessoren (11);

Speicher und

ein oder mehrere Programme, wobei das eine oder die mehreren Programme im Speicher gespeichert sind und dazu ausgelegt sind, durch den einen oder die mehreren Prozessoren (11) ausgeführt zu werden, wobei das eine oder die mehreren Programme Anweisungen einschließt/einschließen, die bei Ausführung durch den einen oder die mehreren Prozessoren das System dazu veranlassen, einen der Ansprüche 1 bis 12 auszuführen.

14. Mindestens ein Computerprogramm, Anweisungen umfassend, die beim Ausführen durch einen Computer den Computer zum Durchführen des Verfahrens nach einem der Ansprüche 1 bis 12 veranlassen.

15. Nichtflüchtiges, computerlesbares Speichermedium, das das eine oder die mehreren Computerprogramme nach Anspruch 14 speichert.

**Revendications**

1. Procédé (1100) mis en œuvre par ordinateur pour déterminer au moins une propriété pétrophysique, le procédé (1100) comprenant :

l'obtention (1105) d'une pluralité de cartes de résonance magnétique nucléaire, RMN, générées au moyen d'un outil de RMN pour une pluralité de zones d'une formation souterraine ;

la décomposition (1110) de chaque carte RMN pour générer une pluralité de fonctions de densité de probabilité pour chaque zone ;

le regroupement (1115) des fonctions de densité de probabilité pour au moins une partie de la pluralité de zones en une pluralité de groupes ; et

la détermination (1120) d'au moins une propriété pétrophysique au moyen de la pluralité de groupes,

**caractérisé en ce que**

la décomposition (1110) comprend l'utilisation d'un procédé basé sur l'optimisation pour déterminer une superposition de fonctions de densité de probabilité, une superposition optimale de fonctions de densité de probabilité pour chaque zone étant déterminée par minimisation d'une différence entre la carte RMN correspondante et une superposition correspondante des fonctions de densité de probabilité.

2. Procédé (1100) de la revendication 1, dans lequel :

la pluralité de cartes RMN et la pluralité de fonctions de densité de probabilité pour chaque zone sont bidimensionnelles, 2D ; ou bien

la pluralité de cartes RMN et la pluralité de fonctions de densité de probabilité pour chaque zone sont tridimensionnelles, 3D ; ou bien

chaque carte de la pluralité de cartes RMN comprend des valeurs $T_1$ et $T_2$.

3. Procédé (1100) de la revendication 1, dans lequel un algorithme de regroupement non supervisé est utilisé pour le regroupement (1115),

et éventuellement dans lequel l'algorithme de regroupement non supervisé utilisé pour le regroupement (1115) comporte l'affectation de chaque groupe à un type de fluide et un type de pore.

4. Procédé (1100) de la revendication 1, dans lequel un algorithme de regroupement supervisé est utilisé pour le regroupement (1115),

et éventuellement dans lequel l'algorithme de regroupement supervisé utilisé pour le regroupement (1115) comporte l'affectation de chaque groupe à un type de fluide et un type de pore.

5. Procédé (1100) de la revendication 1, dans lequel la décomposition (1110) comprend l'utilisation de valeurs moyennes de $T_1$, de valeurs moyennes de $T_2$, de valeurs moyennes de diffusion, d'amplitudes, de variances, de covariances, ou de toute combinaison de celles-ci.

6. Procédé (1100) de la revendication 1, dans lequel la décomposition (1110) comprend l'utilisation de valeurs moyennes de $T_1$, de valeurs moyennes de $T_2$, de valeurs moyennes de diffusion de chaque distribution gaussienne découlant de valeurs moyennes $\vec{\mu}_i$ de chaque fonction de densité de probabilité,
et éventuellement dans lequel les emplacements des pics correspondent aux valeurs moyennes $\vec{\mu}_i$ de chaque fonction de densité de probabilité.

7. Procédé (1100) de la revendication 1, dans lequel le regroupement (1115) comprend la création d'un espace de données multidimensionnel au moyen :

d'une fraction volumique de pores de chaque fonction de densité de probabilité ;
de coordonnées de valeurs moyennes de $T_1$, de valeurs moyennes de $T_2$, de valeurs moyennes de diffusion, ou de toute combinaison de celles-ci, de chaque fonction de densité de probabilité ;
d'amplitudes, de variances, de covariances, ou de toute combinaison de celles-ci ;
ou de toute combinaison de celles-ci.

8. Procédé (1100) de la revendication 1, dans lequel le regroupement (1115) comprend l'utilisation d'un algorithme de regroupement,

l'algorithme de regroupement comprenant les mini-lots, les k-moyennes, la propagation d'affinité, le décalage moyen, le regroupement spectral, la méthode hiérarchique de Ward, le regroupement agglomératif, DBSCAN, OPTICS, BIRCH, le mélange gaussien, ou toute combinaison de ceux-ci ; ou bien
le procédé (1100) comprenant en outre :

l'obtention d'un nombre de groupes défini par l'utilisateur pour caractériser des types de fluides et des types de pores ; et
l'utilisation du nombre de groupes défini par l'utilisateur comme entrée de l'algorithme de regroupement.

9. Procédé (1100) de la revendication 1, comprenant en outre :

la génération (1125) d'une représentation d'un espace de données multidimensionnel par le biais de l'affichage de chaque fonction de densité de probabilité, de chaque groupe, d'une étiquette de chaque groupe, ou de toute combinaison de ceux-ci ; et
l'affichage de la représentation par le biais d'un écran.

10. Procédé (1100) de la revendication 1, comprenant en outre :

la génération d'une représentation de l'au moins une propriété pétrophysique qui est déterminée au moyen de la pluralité de groupes ; et
l'affichage de la représentation par le biais d'un écran.

11. Procédé (1100) de la revendication 1, dans lequel l'au moins une propriété pétrophysique comprend le type de fluide, le volume de composant fluide, le volume de pores, le type de pore, la saturation en hydrocarbures, la saturation en eau, ou toute combinaison de ceux-ci, et éventuellement dans lequel le composant fluide comprend de l'eau liée, de l'eau libre, des hydrocarbures, ou toute combinaison de ceux-ci.

12. Procédé (1100) de la revendication 1, dans lequel :

la détermination d'un volume de pores d'un composant fluide particulier correspondant à un groupe particulier comprend la sommation de chaque volume de pores de chaque fonction de densité de probabilité dans le groupe particulier ; ou bien
l'obtention (1105) de la pluralité de cartes RMN comprend la génération d'au moins une partie des cartes RMN au moyen d'un algorithme d'inversion ; ou bien
le regroupement (1115) des fonctions de densité de probabilité comprend l'utilisation de types de roches.

13. Système informatique (10), comprenant :

un ou plusieurs processeurs (11) ;
une mémoire ; et
un ou plusieurs programmes, le ou les programmes étant stockés dans la mémoire et conçus pour être exécutés par le ou les processeurs (11), le ou les programmes comportant des instructions qui, lors de leur exécution par le ou les processeurs, conduisent le système à exécuter l'une quelconque des revendications 1 à 12.

14. Un ou plusieurs programmes informatiques comprenant des instructions qui, lors de leur exécution par un ordinateur, conduisent l'ordinateur à réaliser le procédé de l'une quelconque des revendications 1 à 12.

15. Support de stockage non transitoire lisible par ordinateur stockant le ou les programmes informatiques de la revendication 14.

FIG. 1A

FIG. 1B

FIG. 2A

FIG. 2B

EP 4 473 347 B1

FIG. 3

EP 4 473 347 B1

FIG. 4

FIG. 5

FIG. 6A

FIG. 6B

FIG. 7B

FIG. 7A

FIG. 8C

FIG. 8B

FIG. 8A

FIG. 9A

FIG. 9B

FIG. 9C

EP 4 473 347 B1

10

Processor 11

Machine-Readable Instructions 100

Obtaining Component 102

Decomposing Component 104

Clustering Component 106

Determining Component 108

Displaying Component 110

Interface 12

Electronic Storage 13

Graphical Display 14

FIG. 10

```
┌─────────────────────────────────────────────────────┐
│  Obtain a plurality of nuclear magnetic resonance    │──── 1105
│  (NMR) maps for a plurality of zones                 │
└─────────────────────────────────────────────────────┘
                        │
                        ▼
┌─────────────────────────────────────────────────────┐
│  Decompose each NMR map to generate a plurality of   │──── 1110
│  probability density functions for each zone         │
└─────────────────────────────────────────────────────┘
                        │
                        ▼
┌─────────────────────────────────────────────────────┐
│  Cluster the probability density functions for at    │──── 1115
│  least a portion of the plurality of zones into a    │
│  plurality of clusters                               │
└─────────────────────────────────────────────────────┘
                        │
                        ▼
┌─────────────────────────────────────────────────────┐
│  Determine at least one petrophysical property using │──── 1120
│  the plurality of clusters                           │
└─────────────────────────────────────────────────────┘
                        │
                        ▼
┌─────────────────────────────────────────────────────┐
│  Generate a representation of a multi-dimensional    │──── 1125
│  data space via a display of each probability        │
│  density function, each cluster, label of each       │
│  cluster, or any combination thereof as well as      │
│  display the representation via a display            │
│  (optionally, generate a representation of at least  │
│  one petrophysical property that is determined using │
│  the plurality of clusters as well as display the    │
│  representation via a display)                       │
└─────────────────────────────────────────────────────┘
```

1100

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 83373017 B
- US 83370129 B
- US 83367262 B
- US 83367139 B
- US 83366303 B
- US 83364950 B
- US 83360644 B
- US 83357118 B
- US 83356782 B
- US 83346842 B

**Non-patent literature cited in the description**

- **HAN JIANG et al.** A comparison of clustering algorithms applied to fluid characterization using NMR T1-T2 maps of shale. *COMPUTERS & GEOSCIENCES*, 02 February 2019, vol. 126, 52-61
- Classification of tight sandstone reservoirs based on NMR logging. **LI CHANG-XI et al.** APPLIED GEOPHYSICS. CHINESE GEOPHYSICAL SOCIETY, 01 December 2019, vol. 16, 549-558
- **STÉFAN VAN DER WALT** ; **JOHANNES L. SCHÖNBERGER** ; **JUAN NUNEZ-IGLESIAS** ; **FRANÇOIS BOULOGNE** ; **JOSHUA D. WARNER** ; **NEIL YAGER** ; **EMMANUELLE GOUILLART** ; **TONY YU**. scikit-image: Image processing in Python. *Peer J*, 2014, vol. 2, e453, https://doi.org/10.7717/-peer.453
- **YU, STELLA, X.** ; **SHI, J.** Multiclass spectral clustering. *Computer Science; Proceedings Ninth IEEE International Conference on Computer Vision*, October 2003, 313
- **VON LUXBURG, U.** A tutorial on spectral clustering. *Statistics and computing*, 2007, vol. 17 (4), 395-416
- **WILLIAMS, C.K.** ; **RASMUSSEN, C.E.** Gaussian processes for machine learning. MIT press, 2006, vol. 2, 4
- Accurate NMR fluid typing using functional T1/T2 ratio and fluid component decomposition. **SUN, B.** ; **SKALINSKI, M.** ; **BRANTJES, J.** ; **LIU, C.** ; **LA-TORRACA, G.A.** ; **MENARD, G.** ; **DUNN, K.J.** IPTC 2008: International Petroleum Technology Conference. European Association of Geoscientists & Engineers, December 2008, 148
- New generation NMR tool for robust, continuous T1 and T2 measurements. **ANAND, V.** ; **ALI, M.R.** ; **AL-ADANI, N.** ; **WILLIS, D.** ; **FREEDMAN, R.** ; **HAMICHI, F.** ; **ABUBAKAR, A.** ; **GROVER, R.** ; **NETO, O.** ; **ABOUD, M.** SPWLA 56th Annual Logging Symposium. Society of Petrophysicists and Well-Log Analysts, August 2015
- **BLOEMBERGEN, N.** ; **PURCELL, E.M.** ; **POUND, R.V.** Relaxation effects in nuclear magnetic resonance absorption. *Physical review*, 1948, vol. 73 (7), 679
- **GARCIA, A.P.** ; **HAN, Y.** ; **HEIDARI, Z.** Integrated Workflow to Estimate Permeability Through Quantification of Rock Fabric Using Joint Interpretation of Nuclear Magnetic Resonance and Electric Measurements. *Petrophysics*, 2018, vol. 59 (05), 672-693
- **GARCIA*, A. P.** ; **HEIDARI, Z.** A New Multiphysics Method for Simultaneous Assessment of Permeability and Saturation-Dependent Capillary Pressure in Hydrocarbon-Bearing Rocks. *SPE Journal*, 2021, vol. 26 (1), 155-171
- Integrated petrophysical interpretation of eagle ford shale with 1-D and 2-D nuclear magnetic resonance (NMR). **JIANG, T.** ; **RYLANDER, E.** ; **SINGER, P.M.** ; **LEWIS, R.E.** ; **SINCLAIR, S.M.** SPWLA 54th annual logging symposium. Society of Petrophysicists and Well-Log Analysts, January 2013
- **OZEN, A.E.** ; **SIGAL, R.F.** T1/T2 NMR surface relaxation ratio for hydrocarbons and brines in contact with mature organic-shale reservoir rocks. *Petrophysics*, 2013, vol. 54 (01), 11-19
- **STÉFAN VAN DER WALT** ; **JOHANNES L. SCHÖNBERGER** ; **JUAN NUNEZ-IGLESIAS** ; **FRANÇOIS BOULOGNE** ; **JOSHUA D. WARNER** ; **NEIL YAGER** ; **EMMANUELLE GOUILLART** ; **TONY YU**. scikit-image: Image processing in Python. *PeerJ*, 2014, vol. 2, e453, https://doi.org/10.7717/peerj.453
- Using NMR to characterize fluids in tight rock unconventional and shale formations. **SUN, B.** ; **YANG, E.** ; **WANG, H.** ; **SELTZER, S.J.** ; **MONTOYA, V.** ; **CROWE, J.** ; **MALIZIA, T.** SPWLA 57th Annual Logging Symposium. Society of Petrophysicists and Well-Log Analysts, June 2016

- **VENKATARAMANAN, L.** ; **EVIRGEN, N.** ; **ALLEN, D.F.** ; **MUTINA, A.** ; **CAI, Q.** ; **JOHNSON, A.C.** ; **GREEN, A.Y.** ; **JIANG, T.** An Unsupervised Learning Algorithm to Compute Fluid Volumes From NMR T1-T2 Logs in Unconventional Reservoirs. *Petrophysics*, 2018, vol. 59 (05), 617-632

- Investigation of Physical Properties of Hydrocarbons in Unconventional Mudstones Using Two-Dimensional NMR Relaxometry. **XIE, Z.H.** ; **GAN, Z.** SPWLA 60th Annual Logging Symposium. Society of Petrophysicists and Well-Log Analysts, January 2019